# EUROPEAN PATENT APPLICATION

(11) **EP 1 953 196 A1**
(43) Date of publication of application: **06.08.2008**
(21) Application number: 08150589.3
(22) Date of filing: 24.01.2008
(51) Int. Cl.: C09C 1/36, C09C 1/40, C09C 1/00, C09C 1/04, C09C 3/08, C09C 3/10

(54) **Polyisobutenyl containing dispersions and uses thereof**

(30) Priority: 31.01.2007 US 898555 P; 04.01.2008 US 969399
(71) Applicant: Air Products and Chemicals, Inc., Allentown, PA 18195-1501 (US)
(72) Inventor: Distefano, Frank Vito, Macungie, PA 18062 (US)
(74) Representative: Schwabe - Sandmair - Marx

(57) **Abstract**

PIBSAs are disclosed as a dispersant for metal oxide nanoparticles in a wide range of liquids. Examples of such liquids comprise at least one member selected from the group consisting of toluene, xylene, mineral spirits, hexanes, and phenoxyisopropanol.

## Description

This Application claims the benefit of Provisional Application No. 60/898,555, filed January 31, 2007. The disclosure of this Application is hereby incorporated by reference.

### CROSS-REFERENCE TO RELATED APPLICATIONS

The subject matter of the instant invention is related to the following U.S. Patent Application Nos. 11/583,439, 11/524,471 and _________, filed on even date herewith an entitled "Hydrophobic Metal And Metal Oxide Particles With Unique Optical Properties". The disclosure of these patent applications is hereby incorporated by reference.

### BACKGROUND OF THE INVENTION

The instant invention relates to using polyisobutenylsuccinic anhydrides and related compounds for dispersing various particles and nanoparticles. Reaction products of P1BSA with amines or alcohols are used in the metalworking industry to prepare water-in-oil emulsions useful as cutting fluids and in the oil industry in automotive additives as detergents to disperse carbon deposits.

Various dispersing agents are known in the art such as disclosed in US 2003/0032679, US 2004/0209782, WO 87/05924 and US 5,266,081. The disclosure of the previously identified patents and patent applications is hereby incorporated by reference.

These dispersing agents typically employ relatively high levels of these agents in order to achieve stability and, as a result, rheological properties are often adversely affected. There is a need in this art for stable dispersions of nanoparticles and/or microparticles particles of metal oxides and/or particles that have an metal oxide surface that do not have these problems, and to methods for preparing these dispersions.

### BRIEF SUMMARY OF THE INVENTION

The instant invention solves problems associated with conventional dispersions by employing polyisobutenylsuccinic anhydrides (PIBSA) and related compounds as a dispersing agent. The instant invention relates to the discovery that PlBSAs are effective, surprisingly even at relatively low levels, as a dispersant for metal oxide particles including nanoparticles in a wide range of liquids. Examples of such liquids comprise at least one member selected from the group consisting of toluene, xylene, mineral spirits, hexanes, and phenoxyisopropanol. Without wishing to be bound by any theory or explanation, it is believed that for many metal oxide surfaces, including at least one of alumina, zinc oxide, ITO, zirconia or titania, the anhydride or diacid group serves as a good anchoring group. It is also believed that in other instances wherein other anchoring groups are more effective (such as mercaptans for noble metal surfaces), it is possible to use the reactive anhydride group to introduce alternate functionality. These PIBSA derivatives may also be used in combination with commercially available dispersant(s) to reduce overall dispersant loading.

One aspect of the instant invention relates to a composition comprising a dispersion of particles in at least one organic liquid. The composition comprises:
a) about 0.1 wt% to about 25 wt%, based on the total weight of the dispersion, of at least one dispersant comprising the structural formula where X has a value between 1 and 1000: 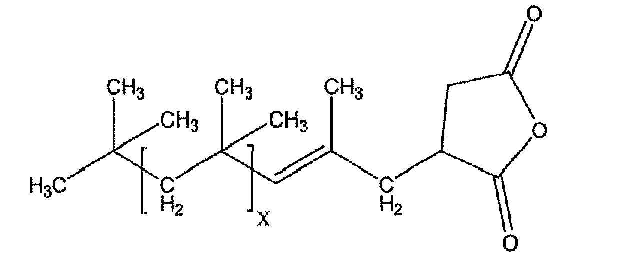 Or reactions products of this molecule such as those having structural formulas: 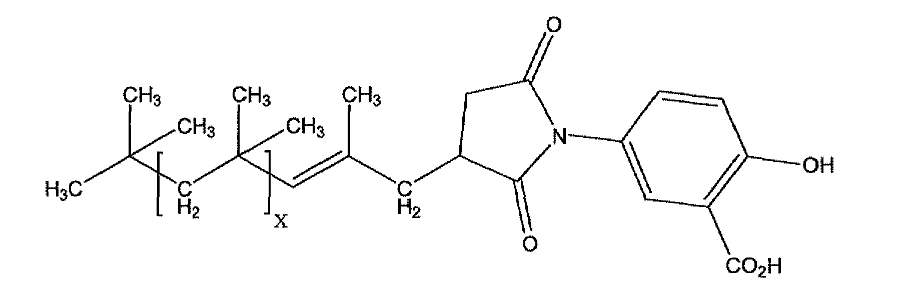 or 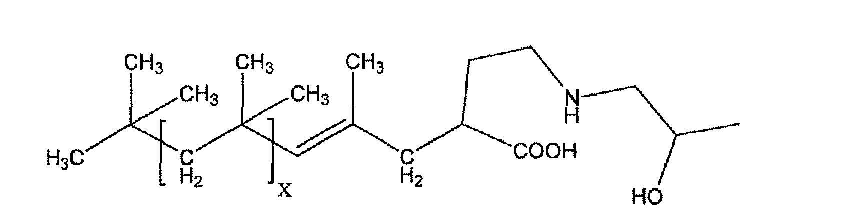 or
   x 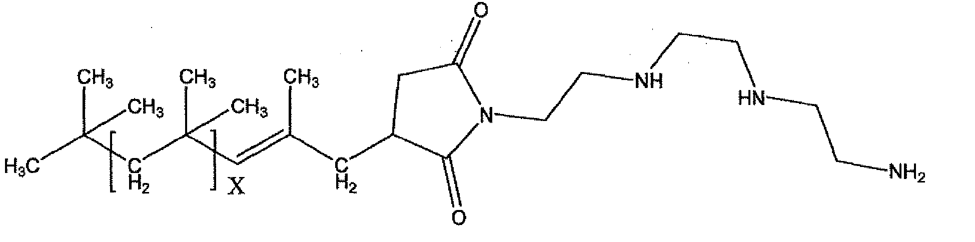
b) about 1 wt% to about 90 wt%, based on the total weight of the dispersion, of particles comprising at least one member selected from the group consisting of metal oxide particles, particles having a metal oxide surface, and mixtures thereof (e.g., particles having a particle size of about 1 nm to about 2000 nm); and
c) about 10 wt% to about 90 wt%, based on the total weight of the dispersion, of at least one organic liquid selected from the group consisting of aromatic or aliphatic hydrocarbons, ketones, esters, carboxylic acids, alcohols, amines, amides, ethers, among others.

The inventive dispersion can be prepared by any suitable method such as ball mills, stirred bead mills, homogenizers, roll mills, and ultrasonication baths.

While the inventive dispersant can be used for dispersing a wide range of particles, nanoparticles of metal oxides, specifically, those of zinc, zirconium, cerium, titanium, aluminum, indium and tin, and mixtures thereof,are illustrative of nanoparticles having important commercial applications. Nano zirconia, ceria and alumina are useful for scratch resistant coatings and heat transfer fluids. Additionally, aluminum metal nanoparticles that have been passivated with a thin layer of aluminum oxide are useful in the development of energetic materials. Indium tin oxide (ITO) nanoparticles have applications in clear conductive coatings, in heat management layers, and in static charge dissipation. Zinc oxide and titania are useful for UV blocking applications, including sunscreens, textiles and coatings. Other applications of metal oxide particles, nanoparticles and/or nanoparticles that have a metal oxide surface include, for example, magnetic materials, heterogeneous catalysts, toner compositions, and ceramics.

In order to supply nanoparticles and/or microparticles as easy to use dispersion master batches or in fully formulated compositions, it is desirable for the particles to be dispersed in various liquids and polymeric matrices. The quality of the dispersion should be commensurate its intended use. For example, the presence of color is undesirable in many applications such as certain inks and coatings. In addition, the dispersion is typically stable so it does not have to be prepared immediately before use, but can be stored after preparation. Depending upon the application of a formulated composition, the inventive composition can comprise about 0.5 to about -90wt.% of an ingredient of the formulated composition.

The inventive composition can be added to a wide range of polymeric matrices. This is most readily achieved by adding the inventive composition to a solution or dispersion of the polymer in an organic solvent. Examples of suitable polymers comprise at least one of polyacrylates, polysiloxanes, polyurethanes, polyesters, polyamides, polyvinyl chloride, polyisoprene, polychloroprene, poly(styrene-co-butadiene), polyepoxides, polyalkyds and among other polymers that can used in coatings, inks and adhesives.

The following Examples are provided to illustrate certain aspects of the instant invention and do not limit the scope the claims appended hereto.

### EXAMPLES

The following materials were used to conduct the Examples below.

| Trade Name | Chemical Description |
|---|---|
| Alumina | spherical gamma alumina, BET particle size 30nm |
| Zirconia | spherical, BET particle size 15 nm |
| Ceria | BET particle size < 100nm |
| Zinc oxide | 30 nm zinc oxide |
| AMP-95 | 2-Amino-2-methyl-1-propanol |
| Disperbyk 163 | polymeric dispersant from Byk Chemie |
| Ancamine 1637 | epoxy curing agent from Air Products and Chemicals |
| PI BSA | Polyisobutenylsuccinic anhydride derived from 1100 molecular weight polybutene, Lubrizol Corp |
| OLOA 15667 | Polyisobutenylsuccinic anhydride derived from 1300 molecular weight polybutene, Chevron Corp |

### Examples 1 and 2

Example 1 was prepared by placing the sample containing 1.0 mm zirconia beads grinding media in a sonication bath for 6 hrs at 65C. The solvent was mineral spirits. Example 2 was prepared in the same manner but 0.1 mm zirconia beads were used. The solvent was a high boiling (140-180C) petroleum ether. The dispersions prepared in Examples 1 and 2 had relatively small particle sizes and exhibited only minor settling after several days.

**Table 1 Dispersion of ZnO Nanoparticles in Organic Solvent with PIBSA**

| Ex. | ZnO | Mineral Spirits | Petroleum Ether | PIBSA | AMP-95 | Particle size, nm |
|---|---|---|---|---|---|---|
| 1 | 10 | 88.9 | | 1.0 | 0.1 | 118 |
| 2 | 9 | | 89.9 | 0.9 | 0.2 | 55 |

| | | | | | | |
|---|---|---|---|---|---|---|
| Compositions are in wt % | | | | | | |

### Examples 3-5

The dispersions in Examples 3-5 were prepared by mixing the ZnO and dispersant with only enough solvent to yield a high solids (70-75%) paste. The paste was processed on a three-roll mill for five passes with a gap setting of 5 mils and a roll speed of 100rpm. After milling, the pastes were diluted with the remainder of the solvent to produce the compositions shown in Table 2. The diluted dispersions had a relatively small particle size and exhibited only minor settling after several days.

**Table 2 Dispersion of ZnO Nanoparticles in Organic Solvent with PIBSA**

| Ex. | ZnO | 1-phenoxy-2-propanol | OLOA 15667 | PIBSA | Particle size, nm |
|---|---|---|---|---|---|
| 3 | 49.4 | 48.1 | | 2.5 | 106 |
| 4 | 49.4 | 48.1 | | 2.5 | 99 |
| 5 | 49.4 | 48.1 | 2.5 | | 102 |

| | | | | | |
|---|---|---|---|---|---|
| Compositions are in wt % | | | | | |

### Examples 6-8

Reaction products of PIBSA with either Ancamine 1637 Mannich Base or 4-aminosalicylic acid were prepared by refluxing the components shown in Examples 6-8 for four hours and then removing solvent at atmospheric pressure. The reaction products were used without further purification.

**Table 3 Reaction Product of PIBSA with Amines**

| Ex. | PIBSA | Ancamine 1637 | 4-aminosalicylic acid | toluene | xylene |
|---|---|---|---|---|---|
| 6 | 35.3 | 11.9 | | 52.8 | |
| 7 | 41.3 | 7.0 | | 51.7 | |
| 8 | 32 | | 3.9 | | 64.1 |

| | | | | | |
|---|---|---|---|---|---|
| Compositions are in wt % | | | | | |

Table 4 illustrates the use of the reaction products from Table 3 as dispersants for alumina, zirconia and ceria nanoparticles.

### Examples 9-16

Examples 9-16 were prepared by placing the samples in a sonication bath for 2 hrs at 65C. The dispersions in Examples 9-13 which were prepared with the PIBSA reaction products were low viscosity fluids which did not exhibit sedimentation over several days. Example 14 shows that neat Ancamine 1637 produced a paste. A comparison of Examples 10 and 15 shows that reducing the dispersant level from 4.8 to 2.4 caused an increase in viscosity. Example 16 shows that a standard commercial dispersant is ineffective in dispersing nano alumina in toluene.

**Table 4 Evaluation of PIBSA Reaction Products**

| Ex. | Reaction Products from Table 3 | | | Al2O3 30 nm | CeO2 | ZrO2 | Ancamine 1637 | Disperbyk 163 | Toluene | Stability |
|---|---|---|---|---|---|---|---|---|---|---|
| | Ex. 6 | Ex. 7 | Ex. 8 | | | | | | | |
| 9 | 4.8 | | | 42.3 | | | | | 52.9 | Good-low viscosity, no setting |
| 10 | | 4.8 | | 42.3 | | | | | 52.9 | Good-low viscosity, no settling |
| 11 | 13.4 | | | | | 26.8 | | | 59.8 | Good-low viscosity, no settling |
| 13 | 13.4 | | | | 26.8 | | | | 59.8 | Good-low viscosity, no settling |
| 14 | | | | 42.3 | | | 4.8 | | 52.9 | paste |
| 15 | | 2.4 | | 42.3 | | | | | 55.3 | paste |
| 16 | | | | 42.3 | | | | 4.8 | 52.9 | paste |

| | | | | | | | | | | |
|---|---|---|---|---|---|---|---|---|---|---|
| Compositions are in wt % | | | | | | | | | | |

### Examples 17-20

Table 5 compares the efficacy of dispersants to yield a low viscosity dispersion of nano alumina in an epoxy curing agent, PACM (bis-4-aminocylcohexylmethane). Both the reaction product from Ex. 6 and Ancamine 1637 give a lower viscosity than the commercial dispersant Disperbyk 163 and the control without dispersant.

**Table 5 Dispersion of Al2O3 Nanoparticles in Epoxy Curing Agent**

| Ex. | Al2O3 20nm | PACM | Reaction Product Ex. 6 | Ancamine 1637 | Disperbyk 163 | Viscosity 20rpm, cps |
|---|---|---|---|---|---|---|
| 17 | 20 | 78 | | | | 1380 |
| 18 | 20 | 78 | | | 2 | 1010 |
| 19 | 20 | 78 | | 2 | | 330 |
| 20 | 20 | 78 | 2 | | | 200 |

| | | | | | | |
|---|---|---|---|---|---|---|
| Compositions are in wt % | | | | | | |

### Examples 21-25

Example 21-25 were prepared by placing the sample containing 0.05 mm zirconia beads grinding media in a sonication bath for 6 hrs at 65C. The solvent was mineral spirits. The PIBSA was evaluated neat and in the presence of various amines. The dispersions prepared in Examples 21-25 had relatively small particle sizes and exhibited only minor settling after several weeks.

**Table 6 Combining PIBSA with Amines**

| | ZnO | PIBSA | Mineral spirits | amine | Dn, vol Nm |
|---|---|---|---|---|---|
| Ex. | | | | | |
| 21 | 10 | 1.0 | 88.9 | none | 95 |
| 22 | 10 | 1.0 | 88.9 | AMP95 | 83.8 |
| 23 | 10 | 1.0 | 88.9 | aminoethylpiperazine | 88.6 |
| 24 | 10 | 1.0 | 88.9 | diethanolamine | 84.7 |
| 25 | 10 | 1.0 | 88.9 | hydroxyethylpieprazine | 93.4 |
| | | | | | |

The invention has been described with reference to particular aspects or embodiments, but other embodiments are apparent to persons of skill in the art, and are included within the scope of the claims.

## Claims

1. A dispersion comprising nanoparticles or particles, and at least one PIBSA or PIBSA reaction product.

2. The dispersion of Claim 1 wherein the PIBSA comprises at least one member selected from the group consisting of 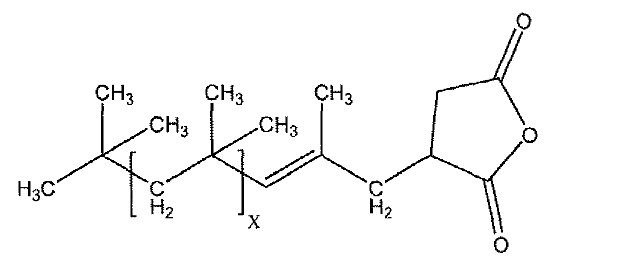 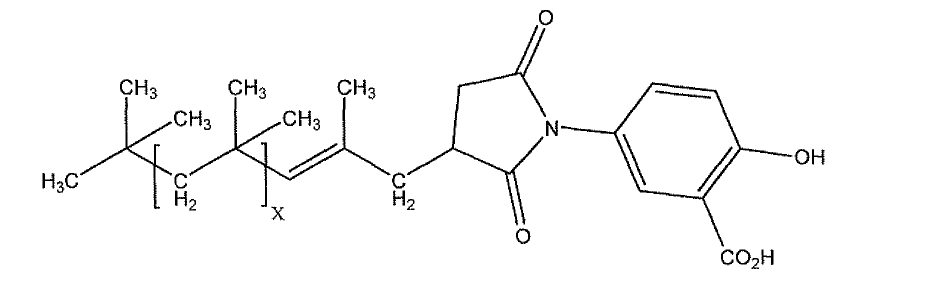 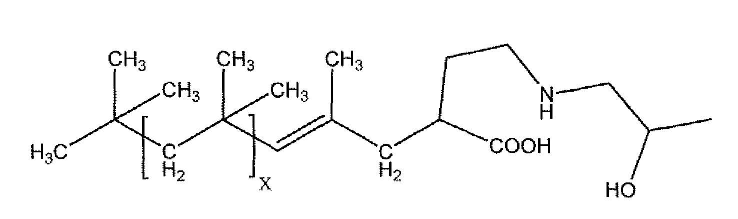 and

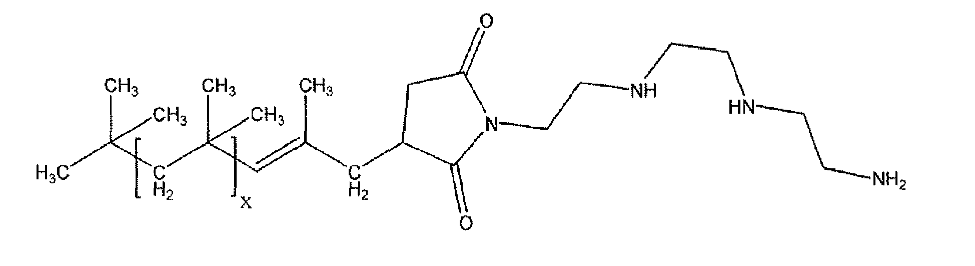

3. The dispersion of Claim 2 wherein X has a value between 1 and 1000.

4. The dispersion of any one of Claims 1 to 3 further comprising at least one organic liquid selected from the group consisting of aromatic or aliphatic hydrocarbons, ketones, esters, carboxylic acids, alcohols, amines, amides and ethers.

5. The dispersion of any one of Claims 1 to 4 wherein the particle size ranges from about 1 nm to about 2000 nm.

6. The dispersion of any one of Claims 1 to 5 wherein the particles comprise metal oxides of at least one member selected from the group consisting of zinc, zirconium, cerium, titanium, aluminum, indium and tin.

7. The dispersion of any one of Claims 1 to 6 further comprising at least one member selected from the group consisting of toluene, xylene, mineral spirits, hexanes, and phenoxyisopropanol.

8. The dispersion of any one of Claims 2 to 7 wherein the nanoparticles comprise zinc oxide and the dispersion further comprises at least one organic liquid.

9. The dispersion of any one of Claims 2 to 8 further comprising at least one amine.

10. The dispersion of any one of Claims 2 to 9 further comprising at least one epoxy curing agent.

11. A composition comprising the dispersion of any one of Claims 1 to 10 and at least one matrix polymer member selected from the group consisting of polyacrylates, polysiloxanes, polyurethanes, polyesters, polyamides, polyvinyl chloride, polyepoxides, and polyalkyds.

12. A coating or film obtainable by applying the composition of Claim 11 onto a substrate.
